# EUROPEAN PATENT APPLICATION

(11) **EP 4 844 333 A1**
(43) Date of publication of application: **25.11.2026**
(21) Application number: 25178373.4
(22) Date of filing: 22.05.2025
(51) Int. Cl.: G01B 11/02

(54) **OPTICAL SENSOR**

(71) Applicant: LMI Technologies Inc., Burnaby, BC V5J 5J8 (CA)
(72) Inventor: Keränen, Heimo, 90240 Oulu (FI)
(74) Representative: EIP

(57) **Abstract**

The invention relates to an optical sensor for measuring a displacement of a measurement object relative to the sensor and/or the colour of the surface of the measurement object. The sensor includes path length modifying optics which provides a different optical path length for measurement light projected into and dispersed over a measurement region such that different wavelength bands are overlapping within the measurement region.

## Description

### Technical Field

The invention relates to the field of optical sensors, in particular to displacement sensors, profile sensors and 3D sensors for measuring the displacement, two-dimensional profile or three-dimensional shape of a measurement object.

### Background

Optical sensors for measuring the displacement, 2D profile or 3D shape of a measurement object project measurement light onto the measurement object and measure certain properties of the measurement light reflected from the surface of the measurement object in order to determine the displacement, 2D profile or 3D shape of the measurement object.

The combination of displacement information, 2D profile information or 3D shape information with spectral reflectance information is often needed for full quality inspection in industrial manufacturing processes. However, traditional displacement, 2D and/or 3D sensors cannot provide simultaneous spectral reflectance measurement of the surface of an object being measured and multi- or hyperspectral imaging systems cannot obtain displacement, 2D profile, or 3D shape information.

Furthermore, many optical sensors have a relatively small range of distances from the sensor over which the displacement, 2D profile or 3D shape can be measured.

### Summary

The invention relates to an optical sensor for measuring a displacement of a measurement object relative to the sensor and/or measuring the spectral properties of the surface of the measurement object, e.g. obtaining a colour or multi-spectral image.

According to a first embodiment of the invention, the sensor includes path length modifying optics, e.g. a dichroic filter assembly, which provides a different optical path length for different wavelength bands, and dispersive optics, e.g. a lens or compound lens, which causes longitudinal chromatic dispersion of light passing through the optics, i.e., light of different wavelengths is focused at different distances from the dispersive optics depending on the wavelength of the light. The sensor projects polychromatic measurement light, emanating from an aperture, through the dispersive optics and the path length modifying optics into a measurement region.

The dispersive optics focus polychromatic measurement light emanating from the aperture at different distances, dispersed over a longitudinal axis, extending from the dispersive optics. The distance at which measurement light is focused depends on the wavelength of the measurement light, typically such that longer wavelengths of measurement light are focused at greater distances from the dispersive optics since the refractive index of most transparent materials decreases with increasing wavelength.

The path length modifying optics are configured to split the polychromatic measurement light into at least two wavelength bands, and to provide a different path length through the path length modifying optics for each of the wavelength bands, such that the ranges on the longitudinal axis over which measurement light of each wavelength band is dispersed are at least partially overlapping in the measurement region. In the absence of path length modifying optics, different wavelength bands are dispersed across different range of distances from the dispersive optics. By providing different path lengths through the path length modifying optics for different wavelength bands, the range of distances from the path length modifying optics across which the different wavelength bands are dispersed can be controlled such that the ranges of distances from the sensor over which the wavelength bands are dispersed are at least partially overlapping. The first embodiment of the invention therefore enables the use of a high dynamic range of measurement light and/or simultaneous capture of spectral reflectance/image data along with measurement of the displacement, 2D profile or 3D shape of a measurement object.

According to a second embodiment of the invention, the sensor operates in essentially the same manner as the sensor of the first embodiment, with the difference that for the sensor of the second embodiment, the path length modifying optics provides different path lengths for the whole spectrum of measurement light, rather than for different wavelength bands, such that multiple "copies" of the spectrum of measurement light are dispersed across different distance ranges from the sensor, thereby providing an extended range of distances over which the displacement, 2D profile or 3D shape of a measurement object can be measured.

Additional features and embodiments of the invention are defined in the claims.

### Brief Description of the Drawings

Figure 1 depicts the principle of overlapping wavelength bands according to a first embodiment of the invention.
Figure 2 depicts the optical system formed by dispersive optics according to the invention.
Figure 3 depicts a sensor according to the first embodiment of the invention.
Figure 4 depicts the principle of overlapping bands according to a second embodiment of the invention.
Figure 5 depicts a method for measuring the displacement and/or profile of the surface of the measurement object using the sensor of the invention.

### Detailed Description

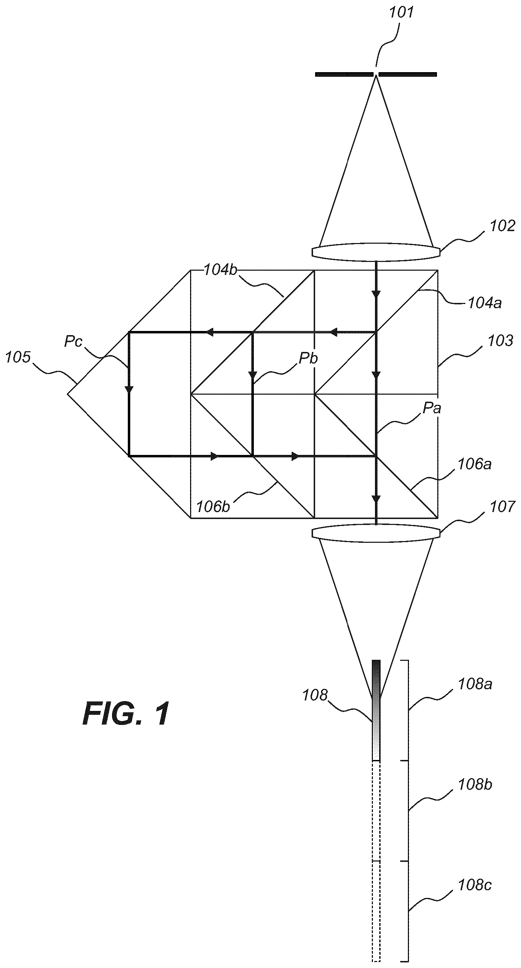

Figure 1 illustrates the principle of overlapping wavelength bands according to a first embodiment of the invention. Polychromatic measurement light emanates from an aperture 101 towards a dispersive optics, e.g. a lens, 102. Dispersive components 102, 107 focus measurement light at different distances along a longitudinal axis extending from the dispersive component 107 depending on the wavelength of the measurement light. While Figure 1 depicts two dispersive component 102, 107, e.g. lenses, a single dispersive component may also be used. In the context of Figure 1, dispersive components 102, 107 may be collectively referred to as "dispersive optics" and the term "dispersive optics" more generally refers to any number of dispersive components that perform the functions described herein. Measurement light passes from the first dispersive component 102 to a path length modifying, e.g. a dichroic filter, 103. The path length modifying optics 103 splits the measurement light into a plurality of wavelength bands and provides a different path length between the aperture 101 and the measurement region 108. In Figure 1, this varying path length is provided between the first dispersive component 102 and second dispersive component 107 for each wavelength band. In the example of Figure 1, measurement light is split into three wavelength bands. The path length modifying optics 103 includes a first filter 104a, which allows measurement light of a first wavelength band to pass towards a second filter 106a and reflects measurement light of the second and third wavelength bands towards a third filter 104b. The third filter 104b reflects measurement light of the second wavelength band towards a fourth filter 106b and allows measurement light of the third wavelength band to pass. Measurement light of the third wavelength band is reflected by reflector 105 toward the fourth filter 106b, where it is allowed to pass by the fourth filter 106b and recombine with measurement light of the second wavelength band, which is reflected by the fourth filter 106b. Recombined measurement light of the second and third wavelength bands passes from the fourth filter 106b to the third filter 106a, which recombines the measurement light of the first wavelength band with the measurement light of the second and third wavelength bands. As a result, measurement light of the first wavelength band traverses path Pa through the path length modifying optics 103, measurement light of the second wavelength band traverses path Pb through the path length modifying optics 103, and measurement light of the third wavelength band traverses path Pc through the path length modifying optics 103. Thus, the measurement light of each different wavelength bands emerging from the path length modifying optics 103 has traversed a different distance along paths Pa, Pb, Pc from the dispersive component 102. By selecting appropriate distances between the filters 104a, 104b, the reflector 105, and the filters 106a, 106b, the paths lengths of each of the paths Pa, Pb, Pc can be adjusted. Furthermore, it is not necessary that both dispersive components 102 and 107 exhibit chromatic dispersion. It is only required at least one of them have chromatic dispersion. Furthermore, where both components 102, 107 exhibit chromatic dispersion, the degree of chromatic dispersion exhibited by each dispersive component does not need to the same.

In practice, path length modifying optics 103 may be provided by four beam splitter/combiner cubes and a right-angle prism, glued (or otherwise fixed) together in the configuration shown in Figure 1. A first type of beam splitter/combiner cube may be used to provide filters 104a and 106a, and a second type of beam splitter/combiner cube may be used to provide filters 104b and 106b.

Measurement light emerging from path length modifying optics 103 passes through a second dispersive component 107 before being focused across a measurement region 108. Measurement region 108 extends across a range of distances 108a from the path length modifying optics 103. In the idealised system, measurement region 108 extends over one dimension along a line extending from the second dispersive component 107. Preferably, the light source 101 is positioned on the optical axis of the optical system formed by first dispersive component 102, the path length modifying optics 103 and the second dispersive component 107, in which case the measurement region 108 extends along the optical axis extending from the second dispersive component 107. In this context, "optical axis" refers to a central line of symmetry passing through the aforementioned components. An optical axis is not necessarily a straight line through space but may be folded or otherwise bent by reflective components such as mirrors or beam splitters. For the sake of clarity, measurement range 108 has been depicted with a finite width perpendicular to the direction over which it extends even though it is ideally one dimensional. In practice, the measurement range 108 may have a small width in this perpendicular direction due to imperfections in real world optics.

Range 108a is the range over which measurement light of the first wavelength band is naturally dispersed, since the path length of path Pa which measurement light of the first wavelength band traverses is unmodified. Range 108b indicates the range over which the measurement light of the second wavelength band would be dispersed if it followed the same path Pa as the measurement light of the first wavelength band. Range 108c indicates the range over which the measurement light of the third wavelength band would be dispersed if it followed the path Pa as the measurement light of the first wavelength band. However, path lengths Pb and Pc for the second and third wavelength bands respectively are selected and modified accordingly by the path length modifying optics 103 such that the measurement light of the second wavelength band and the measurement light of the third wavelength band are also dispersed over the same range 108a. It will be appreciated that the overlap of the wavelength bands may not be perfect, i.e. the end points of the ranges may not be perfectly aligned; however, in the embodiments of the present invention, there is at least partial overlap of the ranges over which the different wavelength bands of measurement light are dispersed. It will also be appreciated that while Figure 1 shows three wavelength bands, an essentially arbitrary number of wavelength bands may be used by varying the configuration of the path length modifying optics 103.

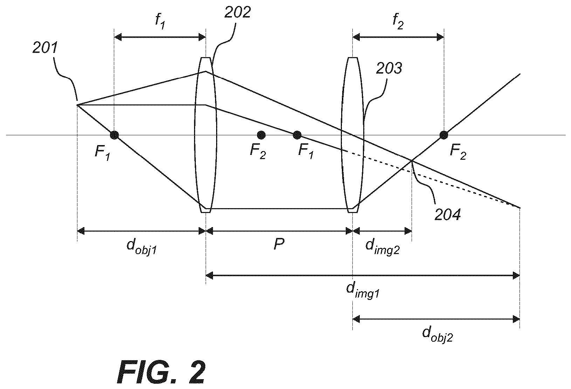

Figure 2 depicts the optical principle of the invention in further detail. Light is emitted from a first point 201 and focused by two lenses 202, 203, with focal points F₁ and F₂ respectively, onto a point 204. The distance d_{obj1} is the distance parallel to the optical axis of the point 201 from the first lens 202. The distance d_{img1} is the distance from the first lens 202 parallel to the optical axis at which the image of point 201 is formed, i.e. at which light from point 201 would be focused, by the first lens 202 alone. The distance d_{obj2} is the distance from the second lens 203 parallel to the optical axis at which the image of point 201 is formed by lens 202. The distance d_{img2} from the second lens 203 of the point 204 at which light from point 201 is focused by the second lens 203 depends on the focal lengths f₁, f₂ of lens 202, 203 respectively and the path length P between the lenses 202, 203. For lenses that exhibit longitudinal chromatic dispersion, the focal length is different for each wavelength of light. By varying the path length P, the range over which different wavelength bands are focused, i.e. the range of locations of points 204 for different wavelengths of light within the wavelength band emitted from point 201, can be made to overlap, as demonstrated in Table 1 below.

**Table 1**

| | ***Λ*** (nm) | ***f₁*** (mm) | ***f₂*** (mm) | ***P*** (mm) | ***d_{obj1}*** (mm) | ***d_{img1}*** (mm) | ***d_{obj2}*** (mm) | ***d_{img2}*** (mm) |
|---|---|---|---|---|---|---|---|---|
| Band 1 | 404 | 55.74 | 55.74 | 60 | 73 | 235.8 | -175.8 | **42.3** |
| 446-499 nm (blue) | 460 | 57.36 | 57.36 | 60 | 73 | 267.7 | -207.7 | **44.9** |
| Band 2 | 480 | 57.80 | 57.80 | 120 | 73 | 277.7 | -157.7 | **42.3** |
| 520-587 nm (green) | 560 | 59.07 | 59.07 | 120 | 73 | 309.5 | -189.5 | **45.0** |
| Band 3 | 615 | 59.64 | 59.64 | 180 | 73 | 325.9 | -145.9 | **42.3** |
| 615-706 nm (red) | 750 | 60.56 | 60.56 | 180 | 73 | 355.5 | -175.3 | **45.0** |

It will be appreciated that the arrangement and conclusions above for light emitted from a single point 201 are equally applicable to light emitted from a line, e.g. a slit aperture.

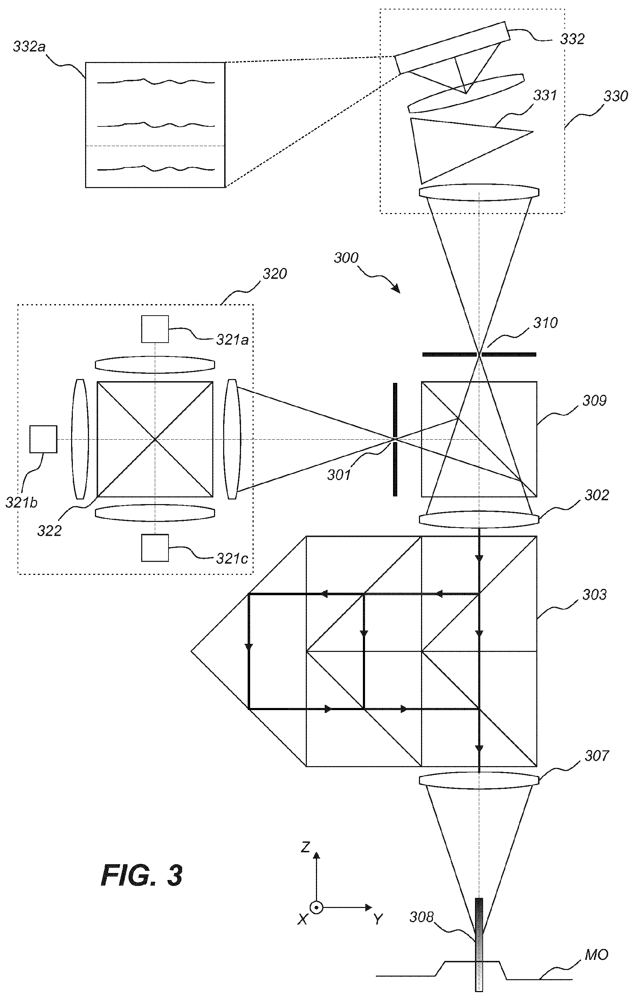

Figure 3 shows a sensor 300 according to a first embodiment of the invention and in accordance with the principles of the invention discussed above. In particular, the dispersive optics 302, 307 and the path length modifying optics 303 are configured to operate in the same manner as described above by projecting measurement light of multiple wavelength bands into a measurement region 308 such that the dispersed wavelength bands are overlapping within the measurement region. In this embodiment of the invention, the measurement region 308 may be defined as the region in which all wavelength bands are overlapping. For example, based on the data shown in Table 1, the measurement region for the three bands, 445-499 nm, 520-587nm, and 615-706nm, may extend from 242.3-44.9 mm measured from the second dispersive component 307. Aperture 301 of the sensor 300 from which polychromatic measurement light is projected is offset by 90 degrees relative the point/aperture 101 shown in Figure 1 due to the presence of beam combiner 309. Measurement light is emitted from the light source 320 towards the aperture 301. Preferably, measurement light emitted from the light source is focused on the aperture 301 in order to maximise the amount of light emitted by the light source 320 that passes through the aperture 301 to the measurement region 308. The aperture 301 is preferably a thin slit, which allows sensing of a profile of a measurement object, but a point or multi-point aperture may also be used for a simple measurement of displacement to a single point on the surface of a measurement object.

In this context, the "profile" or "2D profile" of the measurement object refers to the outline of the measurement object when viewed from the side, i.e. looking at a cross-section of the measurement object taken at the intersection of the measurement region and the measurement object.

The light source 320 may be essentially any source of polychromatic measurement light. Preferably, the light source 320 has individually controllable light sources, each of which emits measurement light across a single wavelength band that is split by the path length modifying optics. In this way, the power for each wavelength band can be individually controlled, e.g. to provide uniform power across all wavelength bands, which is typically not possible with a single white light source, or to allow for high dynamic range measurement with a large difference in the power levels of each wavelength band. For example, Figure 3 depicts three individual light sources 321a, 321b, 321c. The light emitted by each individual light source 321a, 321b, 321c is combined by a beam combiner 322. It will be appreciated that a number of individual light sources other than three may be used, for example where more than three wavelength bands are used by the sensor.

The use of a light source that provides measurement light of at least two different wavelength bands with significantly different radiant flux (i.e. power), e.g. where the radiant flux of one wavelength band is at least twice the radiant flux of a second wavelength band, allows for independent measurements to be taken in each wavelength band at different power levels. This arrangement is particularly advantageous for measuring the displacement/profile at different points on a measurement object that may be darker, poorly reflective, or highly tilted relative to the angle of incidence of measurement light. While high power measurement light projected onto a measurement object may saturate the sensor at parts of the measurement object that reflect measurement light well, e.g. those close to perpendicular to the angle of incidence of measurement light, the lower power measurement bands still allow for the collection of measurement light reflected from the surface without saturating the sensor in the region of the sensor onto which that wavelength band is projected (as explained in more detail below). On the other hand, the lower power measurement band may not produce a sufficiently strong signal on the surface of the sensor for poorly reflective surface, e.g. those that are closer to parallel to the angle of incidence of measurement light, but the higher power measurement band(s) no longer saturate the sensor and can provide a clear signal. The use of multiple measurement bands of differing power allows for the displacement/profile to be determined based on the optimal wavelength band, i.e. that which provides the best signal-to-noise ratio without saturating the sensor. As explained above with respect to Figures 1 and 2, measurement light emanating from the aperture 301 is focused and dispersed across the measurement region 308. When the sensor is in use, it is positioned relative to the measurement object MO such that the surface of the measurement object MO intersects the measurement region 308 and measurement light is reflected from the surface of the measurement object MO at the intersection of the surface of the measurement objection MO and the measurement region 308. Reflected measurement light passes back through the dispersive optics 302, 307 and the path length modifying optics 303 and passes through beam combiner 309 to second aperture 310, which is positioned such that all measurement light reflected from the measurement region 308, i.e. from the intersection of the surface of the measurement object MO and the measurement region 308 is in focus at the second aperture 310. Since different wavelengths of measurement light are in focus at different distances from the sensor 300, the spectral content of the reflected measurement light that is in focus at the second aperture 310 depends on the distance from the sensor 300 at which the measurement light was reflected. In particular, there is a sharp peak in the intensity of measurement light at the wavelength that is in focus at the distance from the sensor 300 at which the surface of the measurement object MO intersects the measurement region 308.

By measuring the spectral content of the light passing through the second aperture 310, the displacement or profile of the measurement object MO can be determined. Thus, the sensor 300 includes an imaging spectrograph 330. Imaging spectrograph 330 may be based, for example, on a prism, e.g. prism 331 as shown, or a diffraction grating used to separate and measure the spectral content of the reflected measurement light. In the example shown in Figure 3, the imaging spectrograph includes an image sensor 332, e.g. a monochrome area camera, onto which measurement light is projected by the prism 331 and other optics of the imaging spectrograph 330.

The surface 332a of the image sensor 332 is also shown in Figure 3. The solid lines on the surface 332a indicate the location of intensity peaks in the reflected measurement light projected onto the surface 332a by the imaging spectrograph optics. The dashed lines indicate different regions on the surface 332a onto which the different wavelength bands of measurement light may be projected. Within each region, the vertical position (as shown in the drawing) of the intensity peak is related to the wavelength of the intensity peak and therefore the Z-position of the surface of the measurement object MO within the measurement region 308, and the horizontal position (as shown in the drawing) of each point corresponds to the X-position of the measurement region 308 from which the measurement light was reflected.

Furthermore, by measuring the profile of the measurement object MO at different position on the surface of the measurement object, which are separated by a known displacement and possible orientation change, the 3D shape of the surface of the measurement object can be reconstructed.

In addition to measuring the displacement and/or profile of the surface of the measurement object MO, the sensor 300 may also be used to capture spectral reflectance data of the surface of the measurement object within each of the wavelength bands of measurement light in order to measure the spectral properties of the surface of measurement object, e.g. obtain a colour or multispectral image. The sensor 300 may also be used to measure the spectral properties of the surface of the measurement object without outputting a measurement of the displacement or profile of the measurement object. However, even where only the spectral properties of the surface of the measurement object are output, the distance may still be measured by the sensor in order to calibrate the measurement of spectral properties, as explained in more detail below.

For the purpose of measuring the spectral properties of the surface of the measurement object, it is preferable for all of the wavelength bands of measurement light to have essentially uniform power such that the reflectance data can be accurately combined to create an image. For example, where red, green, and blue wavelength bands of visible light are used, a colour image of the surface of the measurement object may be produced simultaneously as the profile of the measurement object is scanned. Where more wavelength bands of measurement light are used, multispectral reflectance data may be obtained. The sensor of the present invention is particularly advantageous for obtaining colour or multispectral images of the surface of the measurement object because the image produced is in focus at all points within the measurement plane, i.e. independently of the distance of the surface of the measurement object from the sensor within the measurement plane. This kind of always-in-focus imaging is not possible with conventional imaging methods.

When measuring the spectral properties of the surface of the measurement object, the received intensity is dependent on the optical power and the spectral content of the measurement light projected onto the measurement object, the optical efficiency of the sensor at different wavelengths and the spectral reflectance of the surface of the measurement object, i.e. what is being measured. As a result, the received intensity is also highly dependent on the distance of the measurement object from the sensor. The effects of the optical efficiency and the illumination power may be compensated for by calibration of the sensor. This calibration may be done by measuring the received intensity from a surface that has known reflectance properties (e.g. white surface) at different measurement distances. The reference sample can be an absolute reference with accurately known reflectances in all wavelengths of the wavelength bands of measurement light or it can be a reference surface where the relative reflectances in all wavelengths of the wavelength bands are known. The calibration process may also include measuring the wavelength peak within each band for all distances within the measurement region. The smoothness of the spectral sensitivity of the sensor or the smoothness of the spectral content of the illumination intensity are not critical or needed since these can be corrected by the calibration.

The sensor of the present invention may also be used to measure the distance and colour of multi-layer films, and to determine the thickness of films following similar. In the case of multilayer films, multiple local maxima may be present in the spectral measurement of reflected measurement light corresponding to reflection of the measurement light from the interface of each layers of the multilayer film.

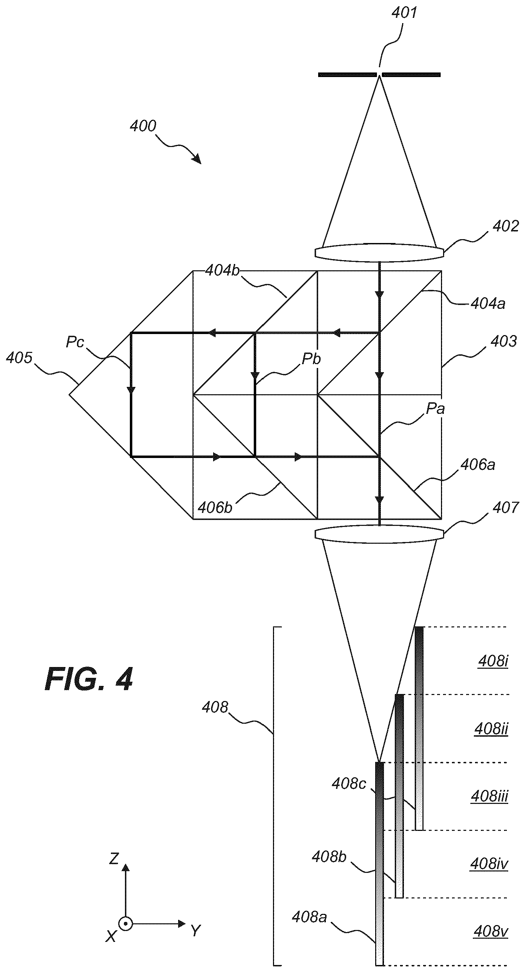

Figure 4 shows the operating principle of a sensor 400 according to a second embodiment of the invention. The components of sensor 400 not shown in Figure 4 correspond to those shown in Figure 3 for sensor 300. The sensor 400 operates in essentially the same manner as described above with respect to the sensor 300, with the difference that for the sensor 400, the path length modifying optics does not include any wavelength filters and instead provides different path lengths Pa, Pb, Pc for the whole spectrum of measurement light such that multiple "copies" of the spectrum of measurement light are dispersed across different distance ranges from the sensor.

Range 408a corresponds to the range of distances over which measurement light traversing path Pa is dispersed and focused, range 408b corresponds to the range of distances over which measurement light traversing path Pb is dispersed and focused, and range 408c corresponds to the range of distances over which measurement light traversing path Pc is dispersed and focused. The total range of distances over which the measurement light of the different path lengths dispersed is dispersed and focused is the measurement region 408. Figure 4 shows the different measurement ranges spread out along the Y-axis; however, this is only done to demonstrate the staggered arrangement of the ranges along the Z-axis. The ranges are in fact all overlapping along the Y-axis and may extend along the same X-range where a slit aperture is used. The path length modifying optics may be provided by, for example, two beam splitter cubes with a 2:1 ratio of reflection to transmission and two beam splitter cubes with a 1:1 ratio of reflection to transmission, thereby providing uniform transmittance for each path length.

As shown in Figure 4, each range 408a-408c is staggered along the dispersion axis (i.e. the Z-axis) such that each range is partially overlapping with one or two other ranges. The partial overlap of the ranges 408a-408c leads to five different parts of the measurement region, 408i-408v, within each different wavelength bands of the measurement light are present. In part 408i, only the lowest wavelength band of the measurement light is present. In part 408ii, the lowest wavelength band and middle wavelength band are present. In part 408iii, the lowest wavelength band, middle wavelength band, and highest wavelength band are present. In part 408iv, the middle wavelength band and the highest wavelength band are present. In part 408v, only the highest wavelength band is present.

In the same manner as in sensor 300, the spectrometer of sensor 400 splits the measurement light of different wavelength bands into different regions of the image sensor. As a result, even though the same wavelengths are repeated in each range 408a-c, the part 408i-408v of the measurement region 408 from which measurement light is reflected can be determined based on the combination of wavelength bands of reflected measurement light that are visible to the image sensor.

The sensor 300 may be part of a system that also includes a processing device or system for gathering output from the sensor 300 and processing said output to generate a displacement, profile or 3D shape of the measurement object. When used with the sensor 300, the processing device may also generate an image or multispectral reflectance data of the surface of the measurement object as described above. Such imaging-either conventional with 1-3 wavelength bands, or multispectral with 4+ wavelength bands-can be performed simultaneously with the displacement, profile or 3D shape measurement. Furthermore, the sensor of the present invention is particularly advantageous for obtaining colour or multispectral images of the surface of the measurement object because the image produced is in focus at all points within the measurement plane, i.e. independently of the distance of the surface of the measurement object from the sensor within the measurement plane. This kind of always-in-focus imaging is not possible with conventional imaging methods.

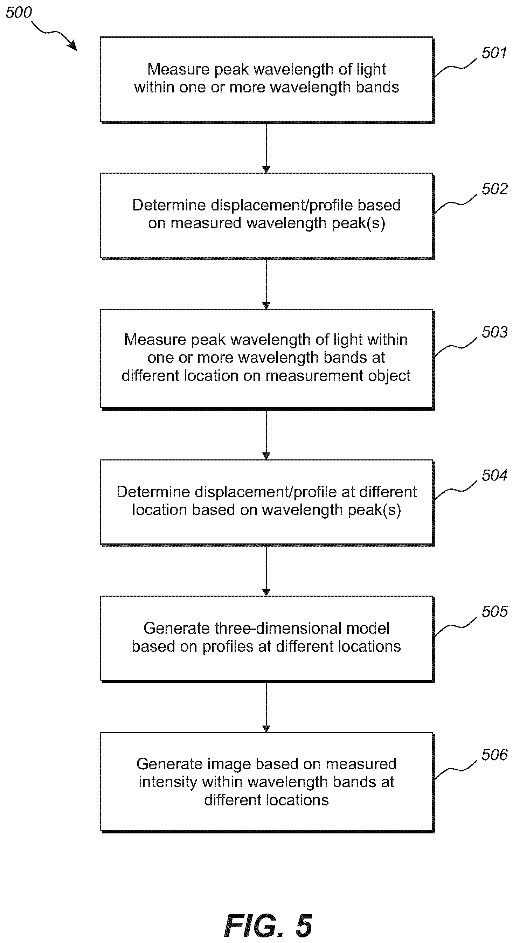

Figure 5 depicts a method 500 for measuring the displacement and/or profile of the surface of the measurement object using the sensor of the invention. At step 501, a peak wavelength of light within one or more wavelength bands of measurement light reflected from the intersection of the measurement region and a surface of a measurement object is measured. At step 502, the displacement and/or profile of the surface of the measurement object is determined based on the one or more measured peak wavelengths.

Steps 503-505 relate to optional steps of generating a three-dimensional model of the measurement object. At step 503, further peak wavelengths of light within one or more wavelength band of measurement light reflected from the intersection of the measurement region and a surface of a measurement object at measured at one or more different part of the surface of the measurement object. Typically this is done by moving the sensor relative to the measurement object or vice versa, e.g. by moving the sensor on a robotic arm or moving the measurement object on a conveyor through the measurement region. At step 504, the profile of each of the one or more different part surface of the measurement object is determined based on the one or more measured peak wavelengths. At step 505, a three-dimensional model of the surface of the measurement object is generated based on the determined profiles of different parts of the surface of the measurement object, e.g. based on a known displacement of the sensor relative to the measurement object between measurements (or vice versa).

Step 506 is an optional further step of generating an image, e.g. a colour image (RGB) or multispectral image, of the surface of the measurement object. The step includes generating an image of the surface of the measurement object based on the intensity of measurement light within each wavelength band reflected from the intersection of the different parts of the surface of the measurement object and the measurement region.

## Claims

1. An optical sensor comprising:
a first aperture;
a light source configured to project measurement light through the first aperture, the measurement light comprising a plurality of wavelength bands;
dispersive optics with longitudinal chromatic aberration configured to focus light at different distances from the dispersive optics depending on the wavelength of the light;
path length modifying optics configured to provide a different path length for each wavelength band of measurement light; and
a spectrometer;
wherein the dispersive optics and path length modifying optics are arranged such that measurement light of each wavelength band passing through the first aperture is dispersed and focused across a common range of distances along a longitudinal axis extending from the optical sensor, the common range of distances across which the measurement light is dispersed and focused defining a measurement region; and
wherein the spectrometer is configured to measure the spectral content of measurement light reflected from the intersection of the measurement region and a surface of a measurement object.

2. The optical sensor of claim 1, wherein the dispersive optics and path length modifying optics are further configured to focus measurement light reflected from the intersection of the measurement region and the surface of the measurement object in or onto a second aperture; and
wherein the spectrometer is configured to measure the spectral content of measurement light reflected from the intersection of the surface of a measurement object and the measurement region that passes through the second aperture.

3. The optical sensor of claim 2, wherein:
the first aperture and second aperture are slit apertures; and
the measurement region extends across a lateral axis, perpendicular to the longitudinal axis extending from the optical sensor, such that for a given position along the lateral axis, a different combination of wavelengths is in focus at each position along the longitudinal axis.

4. The optical sensor of claim 2 or 3, wherein the spectrometer comprises second dispersive optics and an image sensor, and wherein:
the image sensor is configured to measure the intensity of light incident on the active surface of the image sensor, wherein the active surface of the image sensor is defined by a first axis and a second axis perpendicular to the first axis;
the second dispersive optics is configured to focus each wavelength band of the measurement light onto a different region of the active surface image sensor such that each position along the first axis of the image sensor corresponds to a different wavelength of the measurement light.

5. The optical sensor of claim 4, wherein the spectrometer is configured to measure a profile of the surface of the measurement object by measuring, at a plurality of positions along the second axis of the image sensor, a position along the first axis of the image sensor within each region of the image sensor at which light is incident with the highest intensity.

6. An optical sensor comprising:
a first aperture;
a light source configured to project measurement light through the first aperture, the measurement light comprising a plurality of wavelength bands;
dispersive optics with longitudinal chromatic aberration configured to focus light at different distances from the dispersive optics depending on the wavelength of the light;
path length modifying optics configured to provide a plurality of paths, each path of the plurality of paths having a different path length; and
a spectrometer;
wherein the dispersive optics and path length modifying optics are arranged such that measurement light traversing each path of the plurality of paths is dispersed and focused across partially overlapping ranges of distances along a longitudinal axis extending from the optical sensor and such that a different wavelength or combination of wavelengths of measurement light is in focus at each distance from the optical sensor, the partially overlapping ranges of distances across which the measurement light is dispersed and focused defining a measurement region; and
wherein the spectrometer is configured to measure the spectral content of measurement light reflected from the intersection of the measurement region and a surface of a measurement object.

7. The optical sensor of claim 6, wherein the dispersive optics and path length modifying optics are further configured to focus measurement light reflected from the intersection of the measurement region and the surface of the measurement object in or onto a second aperture; and
wherein the spectrometer is configured to measure the measurement light reflected from the intersection of the surface of a measurement object and the measurement region that passes through the second aperture.

8. The optical sensor of claim 7, wherein:
the first aperture and second aperture are slit apertures; and
the measurement region extends across a lateral axis, perpendicular to the longitudinal axis extending from the optical sensor, such that for a given position along the lateral axis a different combination of wavelengths is in focus at each position along the longitudinal axis.

9. The optical sensor of claim 7 or 8, wherein the spectrometer comprises second dispersive optics and an image sensor, and wherein:
the image sensor is configured to measure the intensity of light incident on the active surface of the image sensor, wherein the active surface of the image sensor is defined by a first axis and a second axis perpendicular to the first axis;
the second dispersive optics is configured to focus each wavelength band of the measurement light onto a different region of the active surface image sensor such that each position along the first axis of the image sensor corresponds to a different wavelength of the measurement light.

10. The optical sensor of claim 9, wherein the spectrometer is configured to measure, at a plurality of positions along the second axis of the image sensor, whether measurement light is incident within each region of the image sensor and a position along the first axis of the image sensor within the regions of the image sensor where measurement light is incident at which light is incident with the highest intensity.

11. The optical sensor of any preceding claim, wherein the spectrometer is further configured to measure the intensity of measurement light reflected from the surface of the measurement object within multiple wavelength bands of the plurality of wavelength bands.

12. The optical sensor of any preceding claim, wherein the light source comprises separate sub-light sources;
wherein each sub-light source is configured to emit measurement light of one of the wavelength bands of the measurement light; and
wherein the power of each sub-light source is individually adjustable.

13. The optical sensor of claim 12, wherein a first sub-light source of the sub-light sources is configured to emit measurement light with a power at least two times higher than the power of measurement light emitted by a second sub-light source of the sub-light sources.

14. A system comprising the optical sensor of any preceding claim and a processing device or system in communication with the optical sensor, wherein the processing device or system is configured to calculate the displacement and/or profile of the surface of the measurement object based on measured wavelengths of intensity peaks of measurement light within each wavelength band of measurement light reflected from the intersection of the surface of the measurement object and the measurement region.

15. The system of claim 14, wherein the processing device or system is further configured to calculate a three-dimensional shape of the surface of the measurement object based on measured wavelengths of intensity peaks of measurement light within each wavelength band of measurement light reflected from the intersection of the measurement region and different parts of the surface of the measurement object.

16. The system of claim 14 or 15, wherein the processing device or system is further configured to generate an image of the surface of the measurement object based on the intensity of measurement light within each wavelength band reflected from the intersection of the measurement region and different parts of the surface of the measurement object.

17. A method of measuring the displacement and/or profile of the surface of the measurement object using the optical sensor of any of claims 1 to 13, the method comprising:
measuring a peak wavelength of light within one or more wavelength bands of measurement light reflected from the intersection of the measurement region and a surface of a measurement object; and
determining the displacement and/or profile of the surface of the measurement object based on the one or more measured peak wavelengths.

18. The method of claim 17, further comprising:
measuring a peak wavelength of light within one or more wavelength band of measurement light reflected from the intersection of the measurement region and a surface of a measurement object at one or more different part of the surface of the measurement object;
determining the profile of each of the one or more different parts of the surface of the measurement object based on the one or more measured peak wavelengths; and
generating a three-dimensional model of the surface of the measurement object based on the determined profiles of different parts of the surface of the measurement object.

19. The method of claim 18, wherein the method further comprises generating an image of the surface of the measurement object based on the intensity of measurement light within each wavelength band reflected from the intersection of the different parts of the surface of the measurement object and the measurement region.

20. A method of measuring the spectral reflectance of the surface of the measurement object using the optical sensor of any of claims 1 to 13, the method comprising:
measuring the intensity of measurement light reflected from the surface of the measurement object within multiple wavelength bands of the plurality of wavelength bands.

21. **The** method of claim 20, further comprising generating a colour or multi-spectral image of the surface of the measurement object by:
measuring the intensity of measurement light reflected from the surface of the measurement object within multiple wavelength bands of the plurality of wavelength bands at a plurality of positions on the surface of the measurement object; and
combining the intensity measurements from the plurality of position on the surface of the measurement object to form a colour or multi-spectral image.

## Amended claims

### Amended claims in accordance with Rule 137(2) EPC.

1. An optical sensor comprising:
a first aperture (101, 301, 401);
a light source (320) configured to project measurement light through the first aperture, the measurement light comprising a plurality of wavelength bands;
dispersive optics (102, 107, 302, 307, 402, 407) with longitudinal chromatic aberration configured to focus light at different distances from the dispersive optics depending on the wavelength of the light;
path length modifying optics (103, 303, 403) configured to provide a plurality of paths, each path of the plurality of paths having a different path length; and
a spectrometer (330);
wherein the spectrometer is configured to measure the spectral content of measurement light reflected from the intersection of a measurement region (108, 308, 408) and a surface of a measurement object;
and wherein:
the dispersive optics and path length modifying optics are arranged such that measurement light traversing each path of the plurality of paths is dispersed and focused across partially overlapping ranges of distances along a longitudinal axis extending from the optical sensor and such that a different wavelength or combination of wavelengths of measurement light is in focus at each distance from the optical sensor, the partially overlapping ranges of distances across which the measurement light is dispersed and focused defining the measurement region; or
the path length modifying optics are configured to provide a different path length for each wavelength band of measurement light and the dispersive optics and path length modifying optics are arranged such that measurement light of each wavelength band passing through the first aperture is dispersed and focused across a common range of distances along a longitudinal axis extending from the optical sensor, the common range of distances across which the measurement light is dispersed and focused defining the measurement region.

2. The optical sensor of claim 1, wherein the dispersive optics (102, 107, 302, 307, 402, 407) and path length modifying optics (103, 303, 403) are further configured to focus measurement light reflected from the intersection of the measurement region (108, 308, 408) and the surface of the measurement object in or onto a second aperture (310); and
wherein the spectrometer (330) is configured to measure the measurement light reflected from the intersection of the surface of a measurement object and the measurement region that passes through the second aperture.

3. The optical sensor of claim 2, wherein:
the first aperture (101, 301, 401) and second aperture (310) are slit apertures; and
the measurement region (108, 308, 408) extends across a lateral axis, perpendicular to the longitudinal axis extending from the optical sensor, such that for a given position along the lateral axis a different combination of wavelengths is in focus at each position along the longitudinal axis.

4. The optical sensor of claim 2 or 3, wherein the spectrometer (330) comprises second dispersive optics (331) and an image sensor (332), and wherein:
the image sensor is configured to measure the intensity of light incident on the active surface (332a) of the image sensor, wherein the active surface of the image sensor is defined by a first axis and a second axis perpendicular to the first axis;
the second dispersive optics is configured to focus each wavelength band of the measurement light onto a different region of the active surface of the image sensor such that each position along the first axis of the image sensor corresponds to a different wavelength of the measurement light.

5. The optical sensor of claim 4, wherein the spectrometer (330) is configured to measure, at a plurality of positions along the second axis of the image sensor (332), whether measurement light is incident within each region of the image sensor and a position along the first axis of the image sensor within the regions of the image sensor where measurement light is incident at which light is incident with the highest intensity.

6. The optical sensor of claim 1, wherein the spectrometer (330) is configured to measure a profile of the surface of the measurement object by measuring, at a plurality of positions along the second axis of the image sensor (332), a position along the first axis of the image sensor within each region of the image sensor at which light is incident with the highest intensity.

7. The optical sensor of any preceding claim, wherein the spectrometer (330) is further configured to measure the intensity of measurement light reflected from the surface of the measurement object within multiple wavelength bands of the plurality of wavelength bands.

8. The optical sensor of any preceding claim, wherein the light source (320) comprises separate sub-light sources (321a, 321b, 321c);
wherein each sub-light source is configured to emit measurement light of one of the wavelength bands of the measurement light; and
wherein the power of each sub-light source is individually adjustable.

9. The optical sensor of claim 8, wherein a first sub-light source of the sub-light sources (321a, 321b, 321c) is configured to emit measurement light with a power at least two times higher than the power of measurement light emitted by a second sub-light source of the sub- light sources.

10. A system comprising the optical sensor of any preceding claim and a processing device or system in communication with the optical sensor, wherein the processing device or system is configured to calculate the displacement and/or profile of the surface of the measurement object based on measured wavelengths of intensity peaks of measurement light within each wavelength band of measurement light reflected from the intersection of the surface of the measurement object and the measurement region (108, 308, 408).

11. The system of claim 10, wherein the processing device or system is further configured to calculate a three-dimensional shape of the surface of the measurement object based on measured wavelengths of intensity peaks of measurement light within each wavelength band of measurement light reflected from the intersection of the measurement region (108, 308, 408) and different parts of the surface of the measurement object.

12. The system of claim 10 or 11, wherein the processing device or system is further configured to generate an image of the surface of the measurement object based on the intensity of measurement light within each wavelength band reflected from the intersection of the measurement region (108, 308, 408) and different parts of the surface of the measurement object.

13. A method of measuring the displacement and/or profile of the surface of the measurement object using the optical sensor of any of claims 1 to 9, the method comprising:
measuring a peak wavelength of light within one or more wavelength bands of measurement light reflected from the intersection of the measurement region (108, 308, 408) and a surface of a measurement object; and
determining the displacement and/or profile of the surface of the measurement object based on the one or more measured peak wavelengths.

14. The method of claim 13, further comprising:
measuring a peak wavelength of light within one or more wavelength band of measurement light reflected from the intersection of the measurement region (108, 308, 408) and a surface of a measurement object at one or more different part of the surface of the measurement object;
determining the profile of each of the one or more different parts of the surface of the measurement object based on the one or more measured peak wavelengths; and
generating a three-dimensional model of the surface of the measurement object based on the determined profiles of different parts of the surface of the measurement object.

15. The method of claim 14, wherein the method further comprises generating an image of the surface of the measurement object based on the intensity of measurement light within each wavelength band reflected from the intersection of the different parts of the surface of the measurement object and the measurement region (108, 308, 408).

16. A method of measuring the spectral reflectance of the surface of the measurement object using the optical sensor of any of claims 1 to 9, the method comprising:
measuring the intensity of measurement light reflected from the surface of the measurement object within multiple wavelength bands of the plurality of wavelength bands.

17. The method of claim 16, further comprising generating a colour or multi-spectral image of the surface of the measurement object by:
measuring the intensity of measurement light reflected from the surface of the measurement object within multiple wavelength bands of the plurality of wavelength bands at a plurality of positions on the surface of the measurement object; and
combining the intensity measurements from the plurality of position on the surface of the measurement object to form a colour or multi-spectral image.

18. The optical sensor of claim 1 wherein the path length modifying optics are configured such that said different path lengths correspond to different wavelength bands of measurement light.
